# EUROPEAN PATENT SPECIFICATION

(11) **EP 2 334 011 B1**
(45) Date of publication and mention of the grant of the patent: **13.02.2013**
(21) Application number: 09306211.5
(22) Date of filing: 11.12.2009
(51) Int. Cl.: H04L 12/24, G06F 11/14

(54) **Method for mirroring network management information over an unreliable communication system, corresponding network node and network manager**
Verfahren zum Spiegeln von Netzmanagementinformationen über ein unzuverlässiges Kommunikationssystem, entsprechender Netzknoten und Netzmanager
Procédé d'écriture miroir d'informations de gestion de réseau dans un système de communication non fiable, nýud de réseau correspondant et gestionnaire de réseau

(43) Date of publication of application: 15.06.2011
(73) Proprietor: Alcatel Lucent, 75007 Paris (FR)
(72) Inventor: Gloss, Bernd, 70569 Stuttgart (DE)
(74) Representative: Wetzel, Emmanuelle

(56) References cited:
- EP-A1- 0 871 123
- US-A1- 2002 120 733
- US-A1- 2003 084 371
- US-B1- 6 230 281

## Description

### BACKGROUND OF THE INVENTION

The present invention relates to the field of telecommunication, and more specifically to a method for mirroring network management information over an unreliable communication system.

This section introduces aspects that may be helpful in facilitating a better understanding of the invention. Accordingly, the statements of this section are to be read in this light and are not to be understood as admissions about what is in the prior art or what is not in the prior art.

A mesh network is used for transporting mesh flows, i.e. flows of packets having a unique source and destination node, along fixed paths established between nodes of the network. A path established for such a mesh flow is realized by combining multiple subsequent single-hop transmissions between neighboring mesh nodes, the single-hop transmissions being implemented using wireless or wire-line links, in the following also being referred to as mesh links Pocket forwarding at the mesh relay nodes, i.e., mesh points, is realized based on local packet forwarding information, for example based on label-switching after performing a setup-process of mesh flows.

Although mesh networks are characterized by their high decentralized nature and most of the time by a best effort approach for forwarding data, it is the intention to develop carrier-grade mesh networks which support traffic engineering mechanisms, such as provision of quality of services inside the mesh networks based on agreed service levels.

The major application areas of such carrier-grade mesh networks are (1) extending radio access networks on a temporary basis for coverage or capacity, e.g., by adding small cells with in-band backhauling and (2) to run temporary communication systems for rescue operations in environments with a broken infrastructure, e,g., after an earth-quake, hurricane or tsunami catastrophes. Supporting a heterogeneous set of link technologies which are integrated into the same mesh network is a requirement in scenarios where different spatial environments have to be traversed with mesh links. Different wireless or wire-line link technologies are typically tailored to different environments as indoor/outdoor and, in the case of wireless link technologies, simple or difficult radio interference situations.

As wireless (and wire-line) resources are scarce resource especially since in mesh networks they are also used for backhauling traffic of other links/cells - resource management mechanisms have to be applied in order to avoid network congestions and in order to provide communication services based on agreed service levels. Thus, for providing predictable communication services in mesh networks, an appropriate resource management for wireless and/or wire-line resources has to be established.

Such a mesh resource management has to be adapted for performing admission control of new mesh flows and for mesh optimizations which re-arrange already established mesh flows inside the mesh network. One or more mesh managers having knowledge of the mesh network topology and capabilities are involved in the resource management in addition to the decentralized mesh nodes.

Admission control decisions (whether to accept new mesh flows or not) are based on calculations of remaining link capacities and calculations of expected flow traffic performance measures. The mesh routing / admission control may do this for different potential paths and selects the best path, if such a path can be established without violating capacity bounds and service quality constraints, e.g., delay, and without interfering with other flows breaking their service level agreements, if these constraints are violated, a request for establishing a new mesh flow on the network will be rejected. When accepting a new mesh flow, the path is configured and possibly resource reservations at the link level are made.

Especially such dynamic decisions on new link admission, rejection or rearrangement of links in case of for example bad radio condition requires the maintenance of detailed databases at the different mesh nodes and at one or more mesh manager(s) as well as the reliable, quick and efficient exchange of database-contained information between the mesh nodes and the mesh manager(s).

A particular object of the present invention is to provide for mechanism that enable it to exchange reliably information contained in databases at one point of a communication system with other entities of the communication system which need to have this information for performing a reliable and efficient network management for example resource management in the communication system.

Another object of the invention is to provide a node and a network manager inside a communication system adapted to support such mechanisms.

US 6,230,281 B1 discloses a method and apparatus for providing backup management of a network element in a multi-tiered network management system.

EP 0 871 123 A1 relates to a method for securing a file server in a distributed information processing.

US 2003/0084371 A1 discloses a high availability control method for a router in an autonomous system, the router being in communication with other routers using an IS-IS protocol via interfaces and presenting both an active IS-IS protocol engine and a standby IS-IS protocol engine.

US 2002/0120733 A1 discloses a method, program and system for synchronizing a network manager to a network agent, wherein, in a communications network in which managers maintain data unit copies of data units of their agents, a unique first value, a second value for indicating the number of changes to the associated data unit and a third value for indicating who initiated the respective last change are stored for each data unit in the agent.

### SUMMARY OF THE INVENTION

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

These objects presented above, and others that appear below, are achieved in particular by a method for mirroring network management information over an unreliable communication system according to claim 1, a node according to claim 15 and a network manager according to claim 16.

According to the present invention, a database is reflecting network management information as, for example but not exclusively, link related information, in a node of a communication network as for example but not exclusively a decentralized mesh network. The updates in the link network management information are kept as database updates relative to the latest current version of the database. The updates are communicated incrementally to one or more communication partner(s) using an acknowledgement based transmission mechanism. Based on their latest revision of the database, communication partners can construct on receipt of updates an own new latest revision. Further, a given set of updates which have been properly acknowledged by all communication partners is consolidated in the database to create a subsequent base revision to further work with.

The method according to the present invention presents the advantage to ensure a fast exchange of frequency changing network management information, including their updates, between different entities of the communication network involved in resource planning and network management. Further, the use of an acknowledgment-based mechanism guarantees reliable and stable network management decisions. This is of primordial importance in decentralized networks as mesh networks which comprise a part of self-organizing network management functionalities.

Another advantage of the present invention consists in keeping the amount of network management/link related information exchanged between the sender and the receiver at an acceptable and manageable volume. To achieve this goal, a database with information valid at a predefined point of time plus some subsequent updates is used. Regularly, consolidations of the updates are performed in the database. The point of time of this consolidation is determined based on acknowledgement of the updates to guarantee reliable transmission and data integrity.

Another advantage of the present invention consists in allowing to relate signaling of network managers, e.g., for changes of link allocations, to past base revisions at the node if the network manager was operating on any revision between the latest acknowledged one and the latest at the source. This enables it to improve the handling of database state inconsistencies, e.g., for error recovery, owing to information on the path between the information source node and the network managers.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows a schematic diagram of a mesh network in which the present invention can be used;
- Fig. 2 shows a schematic diagram of a link group in the mesh network of Fig. 1;
- Figure 3 shows an example of interaction between mesh manager and mesh nodes according to the present invention;
- Figure 4a and 4b show an embodiment of the method according to the present invention.
- Figure 5 shows an embodiment of a network node according to the present invention.

### DETAILED DESCRIPTION OF THE INVENTION

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

The present invention will be illustrated in the following in the context of a mesh network. It will understood by those skilled in the art that this is only an exemplary illustration and that the invention may be used in other types of communication systems especially when fast changing database contained information has to be exchanged reliably between two communication partners. This may be the case between a link group coordinator and a mesh manager inside a group network or between a mesh node and a link group coordinator of a mesh network as will be described in detail in the following but this may be the case in any other type of communication systems supporting the exchange of database information.

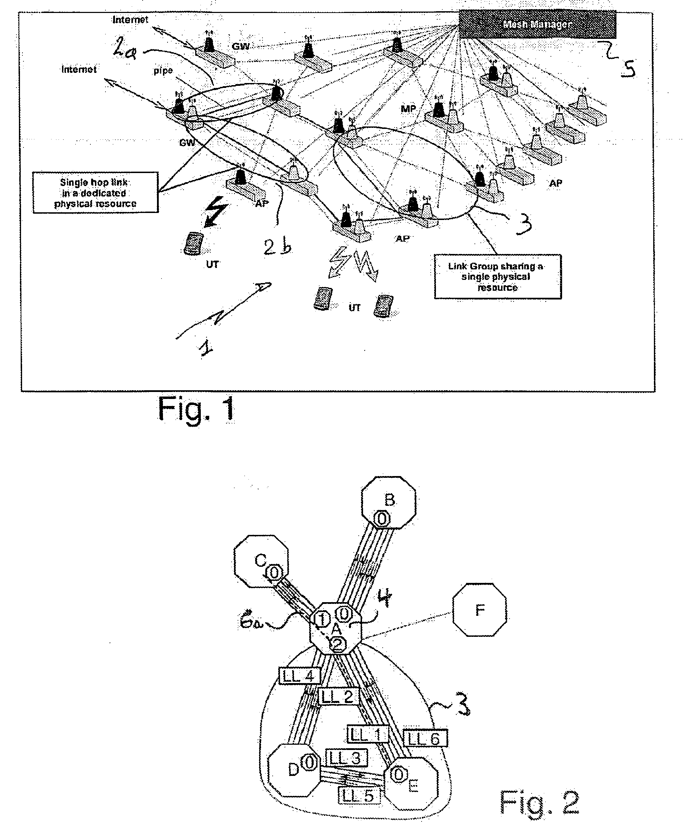

**Fig. 1** shows an example of a mesh network 1 having a plurality of mesh nodes. Each node preferably belong to one of three different types: A first type of nodes, being designated as gateway nodes **GW** in the following, is devised for providing a connection of the wireless mesh network 1 to a packet-based core network (e.g. the Internet), the connection of the gateway nodes GW to the core network being implemented e.g. via a wire-line (cable or fiber-based) connection or via a wireless connection. A second type of nodes are devised as access points **AP** for providing connection to and exchanging information with a plurality of user terminals **UT** which may be connected to the wireless mesh network 1. The gateway nodes GW are linked to the access points AP via zero, one or more relay nodes. Relay node will in the following be referred to as mesh points **MP**.

In the framework of the present invention, any type of mesh point will be considered.

Mesh network 1 may be an heterogeneous network, i.e. the nodes AP, GW, MP, UT and the links between the nodes are implemented using different link technologies, for example in compliance with the IEEE 802.11 (WiFi) and IEEE 802.16 (WiMAX) standard, respectively. Thus, some of the mesh points MP are adapted to perform communications only using a single link technology, whereas other mesh points MP are adapted for performing transmissions using both link technologies, or using twice the same link technology over two interfaces. The latter mesh points MP are represented with two antennas in Fig. 1 to illustrate this possibility.

Mesh network 1 (i.e., the multi-hop view) is preferably managed by a centralized mesh manager **5** shown in Fig. 1, which is adapted to communicate with the mesh points MPs of network 1. In the framework of the present invention, the mesh manager 5 may be a stand alone entity or the mesh manager functionality may be part of a mesh node. Moreover, more than one single mesh manager may be present in the network. For example it may happen that a mesh node is in contact with at least two mesh manager simultaneously.

Some nodes AP, MP, GW of the mesh network 1 are connected via physical (wireless) links (one-hop links), being represented by dashed lines in Fig. 1, the links either being point-to-point links **2a**, **2b** which are (mutually) realized in disjoint wireless resources or on point-to-multi-point and/or multi-point-to-multi-point link groups **3** comprising a plurality of links sharing the some resources (spectrum, time, code, etc.).

The mesh network may preferably but not necessarily comprise a plurality of link groups 3, a link group being defined as a plurality of links between nodes that share the same physical resource, i.e., spectrum, time, code, etc. In other words, mesh links belonging to different link groups do not share the same physical resources unless if they are far apart enough from each other not to interfere.

An example of a link group **3** of the network 1 of Fig. 1 is shown in greater detail in **Fig. 2**.

In the present example, link group 3 comprises logical (i.e. directed) links **LL1** to **LL6** between a first, second and third node **A**, **D**, **E**. In Fig. 2, two further nodes C, B of the wireless mesh network 1 which do not pertain to the link group 3 are also represented, together with a further node **F** which is connected to the first node A via a physical link which does not pertain to the wireless mesh network 1.

Each link LL1 to LL6 inside the link group 3 (resp., inside the mesh) can accommodate multiple mesh flows. Mesh flows are flows of packets with a unique source and destination node and a fixed path through the mesh network 1. Thus, mesh flows are realized by combining multiple subsequent single-hop transmissions on mesh links of the mesh network 1. One such mesh flow **6a** from node C to node E is indicated in Fig. 2. Typically, however, a mesh flow is established between an ingress (access point AP or GW) and an egress (gateway node GW or AP) of the wireless mesh network 1, the mesh flow being used for transporting aggregates of user flows over the wireless mesh network 1.

In the following table (Table 1), the logical links LL1 to LL6 of the link group 3 are represented together with the identifier of the wireless interface (0, 1, or 2) of each node A, D, E on which a respective logical mesh link is installed.

**Table 1**

| **Logical Link ID** | **Source Node IF** | | **Destination Node IF** | | **Estimated Production Cost [Hz x s/ Bit/s] VoIP / BE** | |
|---|---|---|---|---|---|---|
| 1 | A | 2 | E | 0 | 1.1 | 1.4 |
| 2 | A | 2 | D | 0 | 1.4 | 1.7 |
| 3 | D | 0 | E | 0 | 2.1 | 2.2 |
| 4 | D | 0 | A | 2 | 1.7 | 1.9 |
| 5 | E | 0 | D | 0 | 1.8 | 2.1 |
| 6 | E | 0 | A | 2 | 3.1 | 3.3 |

The link group 3 and further link groups are detected and configured in an initial self-configuration phase of the wireless mesh network 1, in which radio parameters, e.g., WLAN channels and OFDMA sub-channel areas, are set and mesh links 2a, 2b and link groups 3 to be used are configured. As stated above, link groups comprise links that share the same physical resource, which is locally split by MAC (medium access control) mechanisms of the wireless technologies and distributed over the different mesh links according to their need.

In each link group,3 a link group coordinator **4** (in the present example, implemented in the first node A) is elected for influencing local packet handling entities and MAC entities at mesh nodes, serving as an interface to the MAC system.

Link group coordinator 4 is more generally the authority which has knowledge about the existence and the technological properties of the links inside a link group, and also on local environmental parameters. This knowledge may include implementation details of media access control mechanisms of the links as well as measurements of environmental properties such as the number of significant interferers.

The link group coordinator 4 gathers information from the network nodes inside the link group related to:
- physical link properties of the links of the link group, such as an overall physical resource capacity, possibly together with link state information,
- estimates for weight for each logical link (LL1 to LL6 in the present example) for a representative set of traffic types. The weights (also called production cost factors) are representing the estimated physical resource consumption rate for establishing a packet-based traffic flow on a respective one of the logical links LL1 to LL6 and are dependent on the link and on the traffic type (instead of the flow), as there is no flow established on a respective link when the estimation is performed. Thus, apart from the physical link properties of the respective mesh link such as a modulation and coding scheme, a Signaf-to-Interference and Noise Ratio, a repetition mechanism overhead, a channel coding efficiency, etc., the weight is also dependent on a traffic type, resp. QoS class (Voice, Video, Best Effort, etc.) of the mesh flow to be established on a respective link LL1 to LL6, as can be easily seen from the table 1.

**Table 2**

| **QoSAlloc ID** | **Logical Link ID** | **(minimum) guaranteed Bitrate (Bit/s)** | **Max Delay (ms)** | **Type** | **Used Production Cost Factor (Hz x s/ Bit/s) M = Measured C= Calculated** |
|---|---|---|---|---|---|
| 1 | 1 | 100000 | 50 | BE | 1.1 (M) |
| 2 | 1 | 100000 | 10 | Voice | 1.7 (C) |
| 3 | 2 | 200000 | 20 | Video | 1.3 (M) |
| 4 | 2 | 200000 | 50 | BE | 2.1 (M) |
| 5 | 3 | 115000 | 30 | BE | 1.1 (M) |
| 6 | 4 | 120000 | 10 | Voice | 2.1 (M) |
| 7 | 4 | 50000 | 5 | Voice | 2.2 (M) |
| 8 | 5 | 64000 | 50 | BE | 1.1 (C) |
| 9 | 5 | 72000 | 100 | BE | 1.7 (C) |
| 10 | 6 | 180000 | 20 | Voice | 2.1 (C) |

The values shown in Table 2, also comprising information about a maximum delay time of a service level agreement on a respective link LL1 to LL6, are a snap-shot of the resource management state information available as a second table in the link group coordinator 4, the state information change regularly, e.g. when new flows are instantiated. The way these changes are dealt with is part of the present invention and will be explained in more details in the following,

Table 2 shows that link group coordinator 4 is keeping track of resources used on the different links inside link group 3 (bookkeeping) and on the QoS requirements of the mesh flows on the different links inside link group 3.

This kind of information is referred in the following under the generic term link related information or network management information. It will be understood by a person skilled in the art that other type of link related information/network management information than those mentioned in table 2 can be adapted to be reliably mirrored according to the present invention.

Link related information or more generally network management information are maintained in the form of a database and need to be exchanged especially with other communication partners. Most usual pairs of communication partners consists in mesh node/ link group coordinator or link group coordinator/ mesh manager or mesh node/ mesh manager in the context of a mesh network. Especially it will be understood that even if no link group is constituted inside the mesh network and nodes remains individual nodes, each node will maintain information related to the links it has currently established with its neighbourhood.

The following will be described in relation with the exchange of database information related to link related information as shown on table 1 and 2 between a link group coordinator and a mesh manager.

It will nevertheless be understood by those skilled in the art that other type of information contained in database can also be exchanged using the method according to the present invention as long as the goal is to exchange this kind of database contained information reliably between two communication partners which need to have a common and reconstructible view of the database content.

Further, it will be understood by those skilled in the art that communication partners may not be restricted to the link group coordinator and mesh managers. For example mesh nodes and any other type of mesh network entity may need to exchange securely database contained information and consequently may make usage of the method according to the present invention. Further, there may be more than two communication partners simultaneously involved in the exchange of database contained information. For example, two mesh managers may need to get simultaneously the same status of the database contained information maintained at one link group manager.

All these consideration should be taken into account for defining the breadth of the present invention and not restrict it solely to the example described below.

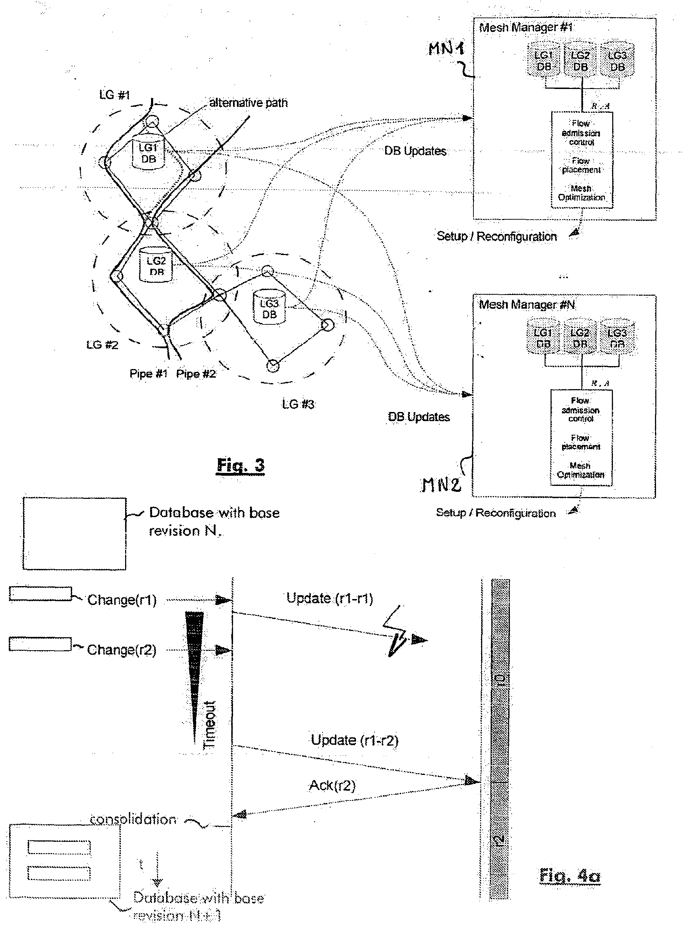

Figure 3 shows an example, of interaction between mesh manager and mesh nodes according to the present invention. Figure 3 shows a mesh network with 3 link groups LG#1, ..., LG#3 and 2 mesh managers out of N, MN1, MN2.

The link groups LG#1,...., LG#3 are for example signaling the overall link group capacity to mesh managers MN1, MN2 which pre-calculate load situations of new and hypothetical pipes. Based on the precalculated load situation mesh managers MN1, MN2 are able to predict which single-hop admission control decisions will be made at the different link group coordinators in LG#1 .., LG#3. For this pre-calculation to be efficient the mesh managers MN1, MN2 need to get and maintain a reliable mirror version of the network management related information contained in a local database at the different link groups coordinators.

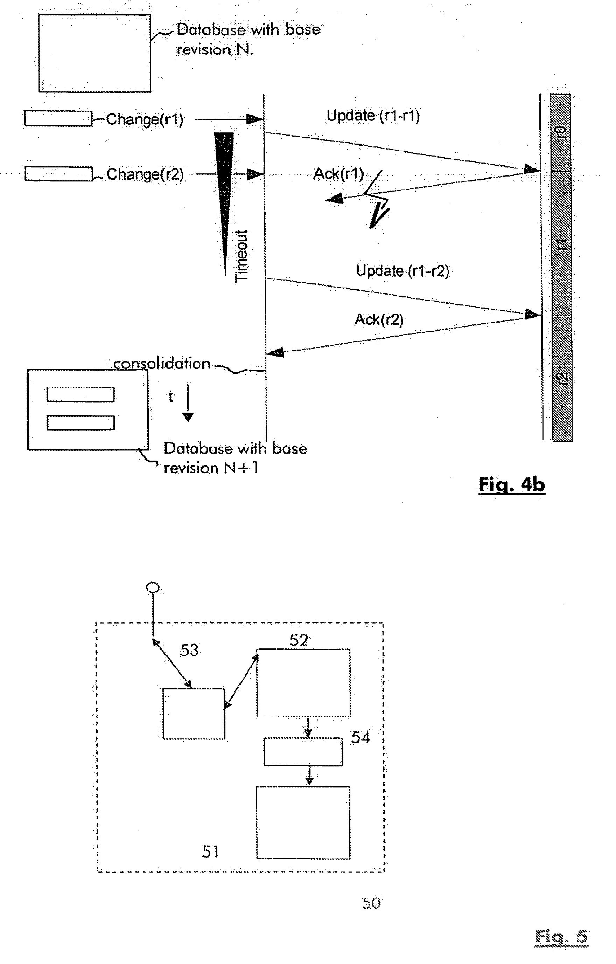

Figure 4a and 4b show an embodiment of the method according to the present invention exemplarily illustrated as database information exchange between link group coordinator of link group LG#1 and mesh manager MN1.

A current link related information database of link group coordinator in LG#1 contains for example information as shown on table 2.

In a first embodiment, at initialization of the communication between link group coordinator of LG#1 and mesh manager MN1, the database content, herein called initial base revision, is exchanged once. This is preferably triggered in that mesh manager MN1 sends a register request to the link group coordinator in LG#1 in order to start the exchange of the initial database content.

Once a common start point has been achieved between link group coordinator and mesh manager, link group coordinator will decide some update in its link related information as it is accepting new or stopping old links inside its link group on request on the mesh manager(s). An update can consist of one or more link information modifications. Each time an update Change(r1), Change(r2), is performed, link group coordinator stores this update separately from the current database and gives it preferably a revision identifier r1, r2. Revision identifiers r1, r2 may be integers showing the number of the update Change (r1), Change (r2).

Then, the link group coordinator communicates incrementally the updates Change (r1), Change (r2) to the link manager, each update being sent together with its revision identifier in messages Update (r1-r1). Update (r1-r2).

An acknowledgement-based mechanism is implemented in the communication between the link group coordinator and the mesh manager so that the mesh manager checks if it has received correctly the updates, checks the revision identifier and send acknowledgement messages Ack (r1), Ack(r2) informing the link group coordinator on the updates reception.

For example in figure 4a, a first update with revision identifier r1, change(r1), is sent by link group coordinator as update (r1-r1) but not received properly. A second update with revision identifier r2, Change(r2), is stored at link group manager. Upon expiry of a timeout showing that no acknowledgment has been received from mesh manager, link group coordinator resents updates chonge(r1) one change(r2) together in a message update(r1-r2). This time, the transmission is error free and mesh manager can send an acknowledgment Ack(r2) indicating that, up to change(r2), all updates have been correctly received.

Another example is given in figure 4b, in this example the update with revision identifier r1 Change(r1) is properly received at link manager. However, the acknowledgement Ack(r1), indicating that all updates up to revision identifier r1 have been properly received, is lost. Consequently, after timeout the link group coordinator resends change(r1) together with the in the meantime decided update, Change(r2). This time, the update Update(r1-r2) is received and properly acknowledged Ack(r2) by link manager. In case duplicate updates have been received, the mesh manager will discard them especially in this case change (r1) has already been correctly received once and can be ignored when it is received a second time.

More generally, the acknowledgment-based mechanism described in this embodiment consists in resending all recent database updates received after the latest acknowledged update from the communication partner. The communication partner sends an acknowledgment for the latest received update comprising an in-sequence revision identifier.

It will be understood by those skilled in the art, that other acknowledgement-based error correction mechanisms can be used in this step of the method. For example, the acknowledgement-based transmission mechanism may consist in resending all non-acknowledged recent updates by the sender, while the receiver sends an acknowledgement for all property received updates regardless if they have in-sequence revision identifier or not. Especially, acknowledgement mechanisms as single acknowledgement, selective acknowledgement or cumulative acknowledgment based may be considered in the framework of the present invention.

In a second embodiment, at initialization of communication between link group coordinator LG#1 and mesh manager MN1, the initial data base information is converted in a set of single updates. Doing so, it is assumed that both communication partners start from an empty database and start to populate it using the principle of updates as described above. In this embodiment, no sending of an initial base revision is necessary.

According to the present invention, a further step of the method consists in consolidating the acknowledged updates in the database of the link group coordinator at both communication partners.

Consequently, any current database content, herein called current base revision, is modified by incorporating updates which have been acknowledged by the communication partner(s) to create a subsequent base revision. Later, the subsequent base revision serves as a new current base revision. There are different ways of performing this database consolidation.

For example, the consolidation may be performed at predefined time intervals. The number of updates to be consolidated corresponding to the number of updates which have been acknowledged by all communication partners of the sender (e.g. by all mesh managers the link group coordinator is registered at). This enables it to get synchronously a database, consolidation at both the link group coordinator and at the mesh managers if these entities are time synchronized.

Alternatively, a consolidation may take place each time a predefined number of updates have been acknowledged by all communication partners. This embodiment is exemplarily illustrated in figure 4a. Before the transmission of the updates, we have a database with revision number N. The consolidation of updates Change(r1) and Change(r2) in the database happens after 2 updates have been acknowledged. The base revision is incremented to N+1 when the consolidation of the two updates has taken place.

Even if it is not required that the numbering of the updates and the numbering of the base revisions are linked, an advantageous embodiment would consists in using the update revision identifier as base revision number. In this case, database revision number M would be followed by update number M+1, then update number M+2 both of which would be consolidated in database revision M+2 if the consolidation happens upon acknowledgment of two updates. This common numbering of the base revision and of the update would provide for a higher reliability of the method.

The use of revision identifier in the method according to the present invention provides the advantage to be able to reconstruct if necessary, any database content between the current base revision and the latest update both at the sender and receiver side. This reconstruction is a significant advantage and represents additional security for the exchange of database information in a communication network as a mesh network. Indeed, this kind of networks requires a much more robust error recovery mechanism due to the fact that the networks are highly decentralized and self organizing. Consequently, in addition to the secure transmission of database information, the present invention provides a way to recreates previous status to help recover from errors due to the decentralized and self organizing nature of the mesh networks.

In a further advantageous embodiment of the present invention, a message sent by a first node requesting an action from a second node may comprise a base revision identifier related to the base revision used at the first node at the time the action was requested. Doing so, the second node is able to check if the action required has been required based on a still valid base revision or if the base revision which has been taken into account is now obsolete (due to any decision which is out of the scope of the present invention). Thanks to a base revision identifier contained in a message exchanged between the first and the second node, it is possible to mentioning an inconsistency between the base revision considered of the first node and the base revision available at the second node and to take some specific measures as for example but not exclusively resynchronization, issuance of an error message and so on...

Figure 5 shows an embodiment of a network node according to the present invention. The network node 50 comprises to the present invention comprises means 51 for maintaining network management information in form of a database, called in the following database 51, means 52 for saving any change in the network management information as a database update, means 52 may be a memory of preferably much lower size than database 51 and may be organised in the form of a look up table, means 53 for exchanging database status information with a communication partner in a communication network and for communicating incrementally the updates to the communication partner using an acknowledgement based transmission mechanism and means 54 for consolidating the updates in the database upon acknowledgment of a predefined set of updates.

Means 54 for consolidating the updates in the database upon acknowledgment of a predefined set of updates may be stand alone means acting on database 51 or can be a part of the functionality of database 51.

Means 52 are connected to means 54 which perform the database consolidation upon occurrence of predefined event (a predefined number of updates have been acknowledged or predefined period of time has expired.)

Means 53 are managing the acknowledgement based transmission of the updates contained in means 52, the updates are sent incrementally to the communication partner following an acknowledgement mechanism as the ones previously described in connection with the method.

In the context of a mesh network, network node 50 may be either a mesh node, a link group coordinator or a mesh manager as described in relation with figure 1.

It will be understood by those skilled in the art that other kinds of networks with other kind of nodes may support the present invention.

## Claims

1. Method for mirroring network management information over a mesh network to one or multiple mirror locations, said method comprising the steps of
- storing said network management information as a local database at a first communication partner;
- saving any change in said network management information as a database update (Change(r1),Change(r2)_by said first communication partner;
- communicating incrementally said updates (Update(r1-r1), Update(r1-r2)) to at least one second communication partner using an acknowledgement based transmission mechanism;
- upon acknowledgement of a predefined set of updates (Ack(r2)), consolidating said updates in said database at said first communication partner.

2. Method according to claim 1, wherein said method further comprises the steps of:
- triggering said first communication partner in order to start the mirroring of said local database content;
- Transmitting once local database content, herein called initial base revision, from said first communication partner to said second communication partner.

3. Method according to claim 1, wherein any change in network management information is allocated a revision identifier and stored individually at said first communication partner, a succession of revision identifiers in combination with their related update being adapted to construct iteratively a subsequent database content, herein called subsequent base revision.

4. Method according to claim 3, wherein said revision identifier is an integer related to the number of the database update.

5. Method according to claim 1, further comprising the step of reconstructing at least one database state between a current base revision and the latest revision in the list of updates.

6. Method according to claim 1, wherein said database is consolidated by incorporation acknowledged updates into sold current base revision creating a subsequent base revision.

7. Method according to claim 1, wherein a consolidation of said list of updates is performed at predefined time intervals, the number of updates to be consolidated corresponding to the already acknowledged updates from all communication partners seeking to get a common status of said network management information.

8. Method according to claim 1, wherein said consolidation is performed each time a predefined number of updates has been acknowledged by all communication partners.

9. Method according to claim 1, wherein said acknowledgment based transmission mechanism consists in resending all recent database updates received after the latest acknowledge update from said communication partner, said communication partner sending an acknowledgment for the latest update comprising an in-sequence received revision identifier.

10. Method according to claim 1, wherein said acknowledgement based transmission mechanism consists in resending all recent updates not acknowledged by said communication partner, said communication partner sending an acknowledgement for all properly received updates.

11. Method according to claim 1 adapted to be used in a mesh network comprising at least partly wireless links, said mesh network comprising nodes, maintaining link related information in form of a local database, said network management related information consisting in said link related information said first and second communication partners mirroring said database being chosen out of said nodes.

12. Method according to claim 11, wherein said node is a link group coordinator comprising link related information from links between a predefined set of nodes in said mesh network.

13. Method according to claim 11, wherein one of said communication partners is a mesh manager.

14. Method according to claim11, wherein a message sent by a first node requesting on action from a second node comprises a base revision identifier related to the base revision used at said first node at the time said action was requested.

15. Node adapted to be used in a mesh network comprising at least partly wireless links, said node comprising means for:
- means (51) for maintaining network management information in form of a database,
- means (52) for saving any change in said network management information as a database update;
- means (53) for exchanging database status information with a communication partner in a communication system and for communicating incrementally said updates to said communication partner using an acknowledgement based transmission mechanism;
- means (54) for consolidating said updates in said database upon acknowledgment of a predefined set of updates.

16. Node according to claim 15, wherein said node is a network manager

## Patentansprüche

1. Verfahren zum Splegeln von Netzwerkverwaltungsinformationen über ein vermaschtes Netzwerk auf eine oder mehrere Spiegelstellen, wobei das besagte Verfahren die folgenden Schritte umfasst:
- Speichern der besagten Netzwerkverwaltungsinformationen als eine lokale Datenbank, an einem ersten Kommunikationspartner,
- Sichern aller Änderungen in den besagten Netzwerkverwaltungsinformationen als eine Detenbenkaktualisierung (Change(r1),Change(r2)) durch den besagten ersten Kommunikationspartner;
- inkrementelles Übermitteln der besagten Aktualisierungen (Update(r1-r1), Update(r1-r2)) an mindestens einen zweiten Kommunikationspartner unter Verwendung eines bestätigungsbasierten Übertragungsmechanismus;
- nach Bestätlgung eines vordefinierten Satzes von Aktualisierungen (Ack(r2)), Konsolidieren der besagten Aktualisierungen in der besagten Datenbank an dem besagten ersten Kommunikationspartner.

2. Verfahren nach Anspruch 1, wobei das besagte Verfahren weiterhin die folgenden Schritte umfasst:
- Ansteuern des besagten ersten Kommunikationspartners, um das Splegeln des Inhalts der besagten lokalen Datenbank zu starten;
- Einmaliges Übertragen des Inhalts der lokalen Datenbank, nachstehend als ursprüngliche Basisrevision bezeichnet, von dem besagten ersten Kommunikationspartner an den besagten zweiten Kommunikationspartner.

3. Verfahren nach Anspruch 1, wobei Jeder Änderung in den Netzwerkverweltungsinformationen eine Revisionskennung zugeordnet und die Änderung individuell an dem besagten ersten Kommunikationspartner gespeichert wird, wobei eine Folge von Revisionskennungen zusammen mit der zugehörigen Aktualisierung geeignet ist, iterativ einen nachfolgenden Datenbankinhalt zu erstellen, nachstehend als nachfolgende Basisrevision bezeichnet.

4. Verfahren nach Anspruch 3, wobei die Revisionskennung eine auf die Anzahl der Datenbankaktualisierungen bezogene ganze Zahl ist.

5. Verfahren nach Anspruch 1, weiterhin umfassend den Schritt des Wiederherstellens mindestens eines Datenbankzustands zwischen einer aktuellen Basisrevision und der letzten Revision In der Liste der Aktualisierungen.

6. Verfahren nach Anspruch 1, wobei die besagte Datenbank durch Einfügen von bestätigten Aktualislerungen In die verkaufte aktuelle Basisrevision, wodurch eine nachfolgende Basisrevision erzeugt wird, konsolidiert wird.

7. Verfahren nach Anspruch 1, wobei eine Konsolidierung der besagten Liste der Aktualisierungen in vordefinierten Zeitintervallen durchgeführt wird, wobei die Anzahl der zu konsolidierenden Aktualisierungen den bereits von allen Kommunikationspartnern, die sich bemühen, einen gemeinsamen Status der besagten Netzwerkverwaltungsinformationen zu erhalten, bestätigten Aktualisierungen entspricht.

8. Verfahren nach Anspruch 1, wobei die besagte Konsolidierung jedes Mal durchgeführt wird, wenn von allen Kommunikationspartnern eine vordefinierte Anzahl von Aktualisierungen bestätigt worden ist.

9. Verfahren nach Anspruch 1, wobei der besagte bestätigungsbasierte Übertragungsmechanismus darin besteht, alle nach der letzten Bestätlgungsaktualisierung von dem besagten Kommunikationspartner empfangenen neuen Datenbankaktualisierungen erneut zu senden, wobei der Kommunikationspartner eine Bestätigung für die letzte Aktuallslerung, welche eine in Reihenfolge empfangene Revisionskennung enthält, sendet.

10. Verfahren nach Anspruch 1, wobei der besagte bestätigungsbasierte Übertragungsmechanismus darin besteht, alle von dem besagten Kommunikationspartner nicht bestätigten neuen Aktualisierungen erneut zu senden, wobei der besagte Kommunikationspartner eine Bestätigung für alle korrekt empfangenen Aktualisierungen sendet.

11. Verfahren nach Anspruch 1, geeignet für die Verwendung In einem vermaschten Netzwerk mit zumindest teilweise drahtlosen Verbindungen, wobei das besagte vermaschte Netzwerk Knoten umfasst, weiche verbindungsbezogene Informationen in der Form einer lokalen Datenbank verwalten, wobei die besagten netzwerkverwaltungsbezogenen Informationen aus den besagten verbindungsbezogenen Informationen bestehen, wobei der besagte erste und der besagte zweite Kommunikationspartner die besagte aus den besagten Knoten gewählte Datenbank spiegeln.

12. Verfahren nach Anspruch 11, wobei der besagte Knoten ein Verbindungsgruppenkoordinator ist, welcher verbindungsbezogene Informationen aus Verbindungen zwischen einem vordefinierten Satz von Knoten In dem besagten vermaschten Netzwerk umfasst.

13. Verfahren nach Anspruch 11, wobei einer der besagten Kommunikationspartner eine vermaschte Verwaltungseinrichtung ist.

14. Verfahren nach Anspruch 11, wobei eine von einem ersten Knoten gesendete Nachricht, welche eine Aktion von dem zweiten Knoten anfordert, eine auf die Basisrevision bezogene Basisrevisionskennung umfasst, die an dem besagten ersten Knoten zum Zeitpunkt, an dem die besagte Aktion angefordert wurde, verwendet wird.

15. Knoten, geeignet für die Verwendung in einem vermaschten Netzwerk mit mindestens teilweise drahtlosen Verbindungen, wobei der besagte Knoten die folgenden Mittel umfasst:
- Mittel (51) zum Verwalten von Netzwerkverwaltungsinformationen in der Form einer Datenbank,
- Mittel (52) zum Sichern aller Änderungen In den besagten Netzwerkverwaltungsinformationen als eine Datenbankaktualisierung;
- Mittel (53) zum Austauschen von Datenbankzustandinformationen mit einem Kommunikationspartner in einem Kommunikationssystem und zum Inkrementellen Übermitteln der besagten Aktualisierungen an den besagten Kommunikationspartner unter Verwendung eines bestätigungsbasierten Übertragungsmechanismus;
- Mittel (54) zum Konsolidieren der besagten Aktualisierungen in der besagten Datenbank nach Bestätigung eines vordefinierten Satzes von Aktualisierungen.

16. Knoten nach Anspruch 15, wobei der besagte Knoten eine Netzwerkverwaltungseinrichtung ist.

## Revendications

1. Procédé de duplication en miroir d'informations de gestion de réseau sur un réseau maillé vers un ou plusieurs emplacements de duplication, ledit procédé comprenant les étapes suivantes :
- stockage desdites informations de gestion de réseau sous la forme d'une base de données locale au niveau d'un premier partenaire de communication ;
- enregistrement de toute modification dans lesdites informations de gestion de réseau sous la forme d'une mise à jour de la base de données (Change(r1),Change(r2)) par ledit premier partenaire de communication ;
- communication incrémentale desdites mises à jour (Update(r1-r1), Update(r1-r2)) à au moins un deuxième partenaire de communication en utilisant un mécanisme de transmission basé sur la confirmation de réception ;
- sur confirmation de la réception d'un ensemble prédéfini de mises à jour (Ack(r2)), consolidation desdites mises à jour dans ladite base de données au niveau dudit premier partenaire de communication.

2. Procédé selon la revendication 1, selon lequel ledit procédé comprend en outre les étapes suivantes :
- déclenchement dudit premier partenaire de communication afin de démarrer la duplication en miroir du contenu de ladite base de données locale ;
- transmission une fois du contenu de la base de données locale, appelé ici révision initiale de la base, depuis ledit premier partenaire de communication vers ledit deuxième partenaire de communication.

3. Procédé selon la revendication 1, selon lequel un identifiant de révision est attribué à toute modification dans les informations de gestion de réseau et stocké Individuellement au niveau dudit premier partenaire de communication, une succession d'identifiants de révision en combinaison avec leur mise à jour associée étant adaptée pour construire de manière itérative un contenu ultérieur de la base de données, appelé ici révision ultérieure de la base.

4. Procédé selon la revendication 3, selon lequel ledit identifiant de révision est un nombre entier en rapport avec le nombre de mises à jour de la base de données.

5. Procédé selon la revendication 1, comprenant en outre l'étape de reconstruction d'au moins un état de la base de données entre une révision actuelle de la base et la dernière révision dans la liste des mises à jour.

6. Procédé selon la revendication 1, selon lequel ladite base de données est consolidée en incorporant des mises à jour dont la réception est confirmée dans la révision actuelle de la base vendue, créant ainsi une révision ultérieure de la base.

7. Procédé selon la revendication 1, selon lequel une consolidation de ladite liste des mises à jour est effectuée à des intervalles de temps prédéfinis, le nombre de mises à Jour à consolider correspondant aux mises à jour dont la réception est déjà confirmée parmi tous les partenaires de communication qui cherchent à obtenir un état commun desdites informations de gestion de réseau.

8. Procédé selon la revendication 1, selon lequel ladite consolidation est effectuée à chaque fois que la réception d'un nombre prédéfini de mises à jour a été confirmée par tous les partenaires de communication.

9. Procédé selon la revendication 1, selon lequel ledit mécanisme de transmission basé sur la confirmation de réception consiste à renvoyer toutes les mises à jour récentes de la base de données reçues après la confirmation de réception de la dernière mise à jour par ledit partenaire de communication, ledit partenaire de communication envoyant une confirmation de réception pour la dernière mise à jour comprenant un identifiant de révision reçu dans l'ordre.

10. Procédé selon la revendication 1, selon lequel ledit mécanisme de transmission basé sur la confirmation de réception consiste à renvoyer toutes les mises à Jour récentes dont la réception n'a pas été confirmée par ledit partenaire de communication, ledit partenaire de communication envoyant une confirmation de réception pour toutes les mises à jour reçues correctement.

11. Procédé selon la revendication 1, adapté pour être utilisé dans un réseau maillé comprenant des liaisons au moins partiellement sans fil, ledit réseau maillé comprenant des noeuds qui maintiennent les informations en rapport avec la liaison sous la forme d'une base de données locale, lesdites Informations de gestion de réseau étant constituées desdites informations en rapport avec la liaison desdits premier et deuxième partenaires de communication qui dupliquent en miroir ladite base de données choisie parmi lesdits noeuds.

12. Procédé selon la revendication 11, selon lequel ledit noeud est un coordinateur de groupe de liaisons comprenant des informations en rapport avec la liaison sur les liaisons entre un ensemble prédéfini de noeuds dans ledit réseau maillé.

13. Procédé selon la revendication 11, selon lequel l'un desdits partenaires de communication est un gestionnaire de maillage.

14. Procédé selon la revendication 11, selon lequel un message envoyé par un premier noeud demandant une action de la part d'un deuxième noeud comprend un identifiant de révision de base en rapport avec la révision de base utilisée au niveau dudit premier noeud au moment où ladite action a été demandée.

15. Noeud adapté pour être utilisé dans un réseau maillé comprenant des liaisons au moins partiellement sans fil, ledit réseau comprenant les moyens suivants :
- moyens (51) pour maintenir des informations de gestion de réseau sous la forme d'une base de données ;
- moyens (52) pour enregistrer toute modification dans lesdites informations de gestion de réseau sous la forme d'une mise à jour de la base de données ;
- moyens (53) pour échanger des Informations d'état de la base de données avec un partenaire de communication dans un système de communication et pour communiquer de manière incrémentale lesdites mises à jour audit partenaire de communication en utilisant un mécanisme de transmission basé sur la confirmation de réception ;
- moyens (54) pour consolider lesdites mises à jour dans ladite base de données sur confirmation de la réception d'un ensemble prédéfini de mises à jour.

16. Noeud selon la revendication 15, avec lequel ledit noeud est un gestionnaire de réseau.
